# EUROPEAN PATENT APPLICATION

(11) **EP 4 694 243 A1**
(43) Date of publication of application: **11.02.2026**
(21) Application number: 23930598.0
(22) Date of filing: 30.03.2023
(51) Int. Cl.: H04W 8/24

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); LIU, Liu, Beijing 100190 (CN); YOU, Luhua, Beijing 100190 (CN)
(74) Representative: Hoffmann Eitle
(86) International application number: PCT/JP2023/013413
(87) International publication number: WO 2024/201961

(57) **Abstract**

A terminal according to one aspect of the present disclosure includes a transmitting section that performs reporting of a supported functionality, a receiving section that receives an indication of at least one of activation, deactivation, fallback, and switch of a functionality, and a control section that performs, based on the indication, at least one of the activation, the deactivation, the fallback, and the switch. According to one aspect of the present disclosure, preferable overhead reduction/channel estimation/resource use can be achieved.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to utilize the artificial intelligence (AI) technology, such as machine learning (ML), for control, management, and the like of networks/devices.

For use cases for utilization of AI models, spatial domain downlink (DL) beam prediction, temporal DL beam prediction, and the like are under study. Such beam prediction methods may be referred to as AI-based beam prediction (beam reporting), AI-based beam management (BM), and so on. The temporal DL beam prediction may be referred to as, for example, time-domain channel state information (CSI) prediction and so on.

It is studied that a plurality of types of life cycle management (LCM) are introduced in such utilization of AI, but studies have not been sufficiently made on this for some cases. Unless these studies are sufficient, preferable overhead reduction/channel estimation/resource use cannot be achieved, which may suppress improvement of communication throughput/communication quality.

Thus, an object of the present disclosure is to provide a terminal, a radio communication method, and a base station capable of achieving preferable overhead reduction/channel estimation/resource use.

### Solution to Problem

A terminal according to one aspect of the present disclosure includes a transmitting section that performs reporting of a supported functionality, a receiving section that receives an indication of at least one of activation, deactivation, fallback, and switch of a functionality, and a control section that performs, based on the indication, at least one of the activation, the deactivation, the fallback, and the switch.

### Advantageous Effects of Invention

According to one aspect of the present disclosure, preferable overhead reduction/channel estimation/resource use can be achieved.

### Brief Description of Drawings

[FIG. 1] FIG. 1 is a diagram to show an example of an AI model management framework.
[FIG. 2] FIGS. 2A to 2D are diagrams to show examples of a configuration of a specific ID according to Embodiment 1-1.
[FIG. 3] FIG. 3 is a diagram to show an example of transmission/reception operation according to alternative 1-1'-1.
[FIG. 4] FIGS. 4A and 4B are diagrams to show examples of transmission/reception operation according to alternative 1-1'-2.
[FIG. 5] FIG. 5 is a diagram to show an example of LCM operation according to a second embodiment.
[FIG. 6] FIG. 6 is a diagram to show an example of a schematic structure of a radio communication system according to one embodiment.
[FIG. 7] FIG. 7 is a diagram to show an example of a structure of a base station according to one embodiment.
[FIG. 8] FIG. 8 is a diagram to show an example of a structure of a user terminal according to one embodiment.
[FIG. 9] FIG. 9 is a diagram to show an example of a hardware structure of the base station and the user terminal according to one embodiment.
[FIG. 10] FIG. 10 is a diagram to show an example of a vehicle according to one embodiment.

### Description of Embodiments

### (Application of Artificial Intelligence (AI) technology to Radio Communication)

For future radio communication technologies, a study is underway to utilize the AI technology, such as machine learning (ML), for control, management, and the like of networks/devices.

For example, a study is underway on a terminal (user terminal, User Equipment (UE))/base station (BS) utilizing the AI technology for improvement in channel state information (CSI) feedback (for example, overhead reduction, accuracy enhancement, prediction), enhancement in beam management (for example, accuracy enhancement, prediction in time/spatial domain), enhancement in location measurement (for example, location estimation/prediction enhancement), and the like.

The AI model may output at least one piece of information among an estimated value, a predicted value, a selected operation, classification, and the like, based on the input information. The UE/BS may input channel state information, a reference signal measurement value, and the like to the AI model and output highly accurate channel state information/measured value/beam selection/location, future channel state information/radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, estimation, prediction, and inference may be interchangeably interpreted. In the present disclosure, "estimate," "predict," and "infer" may be interchangeably interpreted.

In the present disclosure, the object may be, for example, an apparatus, a device, or the like, such as a UE or a BS. In the present disclosure, the object may correspond to a program/model/entity operating in the apparatus.

Note that, in the present disclosure, the AI model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, the AI model may mean a data-driven algorithm that applies AI technology and generates a set of outputs based on a set of inputs.

In the present disclosure, an AI model, a model, an ML model, predictive analytics, a predictive analytics model, a tool, an autoencoder, an encoder, a decoder, a neural network model, an AI algorithm, a scheme, and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, the autoencoder may be interchangeably interpreted as an arbitrary autoencoder such as a stacked autoencoder and a convolutional autoencoder. The encoder/decoder in the present disclosure may adopt a model of Residual Network (ResNet), DenseNet, RefineNet, or the like.

In the present disclosure, an encoder, encoding, encode/encoded, modification/change/control by an encoder, compressing, compress/compressed, generating, generate/generated, and the like may be interchangeably interpreted.

In the present disclosure, a decoder, decoding, decode/decoded, modification/change/control by a decoder, decompressing, decompress/decompressed, reconstructing, reconstruct/reconstructed, and the like may be interchangeably interpreted.

In the present disclosure, a layer (for an AI model) may be interchangeably interpreted as a layer (input layer, intermediate layer) used in an AI model. The layer in the present disclosure may correspond to at least one of an input layer, an intermediated layer, an output layer, a batch normalization layer, a convolutional layer, an activation layer, a dense layer, a normalization layer, a pooling layer, an attention layer, a dropout layer, a fully-connected layer, and the like.

In the present disclosure, an AI model training method may include supervised learning, unsupervised learning, reinforcement learning, federated learning, and the like. The supervised learning may mean processing of training a model from an input and a corresponding label. The unsupervised learning may mean processing of training a model without labeled data. The reinforcement learning may mean processing of training a model from an input (that is, a state) and a feedback signal (that is, a reward) generated from an output (that is, an action) from the model in an environment in which models interact with each other.

In the present disclosure, generation, computation, derivation, and the like may be interchangeably interpreted. In the present disclosure, "perform," "manage," "operate," "carry out," and the like may be interchangeably interpreted. In the present disclosure, training, learning, update, retraining, and the like may be interchangeably interpreted. In the present disclosure, inference, after-training, substantial use, actual use, and the like may be interchangeably interpreted. In the present disclosure, a signal may be interpreted as a signal/channel and vice versa.

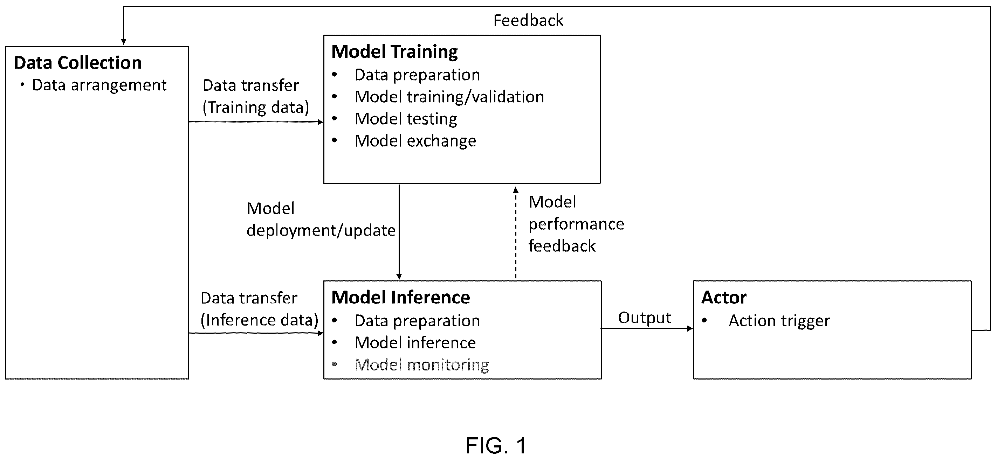

FIG. 1 is a diagram to show an example of an AI model management framework. In the present example, stages related to an AI model are shown using blocks. The present example is also expressed as AI model life cycle management (LCM).

A data collection stage corresponds to a stage to collect data for generating/updating the AI model. The data collection stage may include data arrangement (for example, determining which data is transferred for model training /model inference), data transferring (for example, transferring data to an entity (for example, UE, gNB) performing model training/model inference), and the like.

Note that data collection may mean processing in which a network node, a management entity, or a UE collects data for the purpose of AI model training/data analysis/inference. In the present disclosure, processing and a procedure may be interchangeably interpreted. In the present disclosure, collection may mean acquiring a data set (for example, available as an input/output) for training/inference of an AI model, based on measurement (channel measurement, beam measurement, radio link quality measurement, location estimation, or the like).

In the present disclosure, offline field data may be data collected from a field (real world) and used for offline training of an AI model. In the present disclosure, online field data may be data collected from a field (real world) and used for online training of an AI model.

A model training stage is to perform the model training, based on data (training data) transferred from the collection stage. This stage may include data preparation (for example, performing preprocessing, cleaning, formatting, conversion, and the like of data), model training/validation, model testing (for example, checking whether a trained model meets a performance threshold), model exchange (for example, transferring a model for distributed learning), model deployment/update (deploying/updating a model for an entity performing model inference), and the like.

Note that AI model training may mean processing for training an AI model with a data-driven method and acquiring a trained AI model for inference.

AI model validation may mean sub-processing of training for evaluating quality of an AI model by using a data set different from the data set used for model training. The sub-processing is useful for selection of model parameters generalized beyond the data set used for model training.

AI model testing may mean sub-processing of training for evaluating performance of a final AI model by using a data set different from the data set used for model training/validation. Note that testing need not presuppose subsequent model tuning, unlike validation.

A model inference stage is to perform model inference, based on the data (inference data) transferred from the collection stage. This stage may include data preparation (for example, performing preprocessing, cleaning, formatting, conversion, and the like of data), model inference, model monitoring (for example, monitoring of performance of model inference), model performance feedback (feeding back model performance to an entity performing model training), output (providing a model output to an actor), and the like.

Note that AI model inference may mean processing for producing a set of outputs from a set of inputs by using a trained AI model.

A UE side model may mean an AI model whose inference is entirely performed in the UE. A network side model may mean an AI model whose inference is entirely performed in the network (for example, the gNB).

A one-sided model may mean the UE side model or the network side model. A two-sided model may mean a pair of AI models that perform joint inference. Here, joint inference may include AI inference whose inference is jointly performed by the UE and the network, and for example, a first part of the inference may be first performed by the UE and the remaining part may be performed by the gNB (or vice versa).

AI model monitoring may mean processing for monitoring inference performance of an AI model, and may be interchangeably interpreted as model performance monitoring, performance monitoring, or the like.

Note that model registration may mean assigning a version identifier to a model and making the model executable (registering the model) by compiling it into specific hardware used in the inference stage. Model deployment may mean delivering a runtime image (or an image of an execution environment) of a fully developed and tested model to a target (for example, the UE/gNB) in which inference is performed (or enabling the runtime image in the target).

An actor stage may include an action trigger (for example, determining whether to trigger action to another entity), feedback (for example, feeding back information required for training data/inference data /performance feedback), and the like.

Note that, for example, training of a model for mobility optimization may be performed in, for example, maintenance, operation, and administration in a network (NW) (Operation, Administration and Maintenance (Management) (OAM))/gNodeB (gNB). In the former case, interoperation, large amounts of storage, operator manageability, model flexibility (such as feature engineering) are advantageous. In the latter case, model update latency, data exchange for model deployment, and the like are advantageously not required. The inference of the model described above may be performed in the gNB, for example.

The entity performing training/inference may differ depending on a use case (that is, a function of the AI model). The function of the AI model may include beam management, beam prediction, an autoencoder (or information compression), CSI feedback, positioning, and the like.

For example, for AI-aided beam management based on a measurement report, the OAM/gNB may perform the model training, and the gNB may perform the model inference.

For AI-aided UE-assisted positioning, a Location Management Function (LMF) may perform the model training, and the LMF may perform the model inference.

For CSI feedback/channel estimation using an autoencoder, the OAM/gNB/UE may perform the model training, and the gNB/UE may perform the model inference (jointly).

For AI-aided beam management or AI-aided UE-based positioning based on beam measurements, the OAM/gNB/UE may perform the model training, and the UE may perform the model inference.

Note that model activation may mean activating an AI model for a specific function. Model deactivation may mean deactivating an AI model for a specific function. Model switching may mean deactivating a currently active AI model for a specific function and activating a different AI model.

Model transfer may mean delivering an AI model on an air interface. The delivering may include delivering one or both of parameters of a model structure known to a receiving side and a new model having parameters. The delivering may include a full model or a partial model. Model download may mean model transfer from the network to the UE. Model upload may mean model transfer from the UE to the network.

### (Life Cycle Management (LCM))

For future radio communication systems (for example, Rel. 18 or later versions), introduction of a plurality of LCMs is under study.

The plurality of LCMs may be an LCM based on a functionality and an LCM based on a model ID. The LCM based on a functionality and the LCM based on a model ID may be referred to as functionality-based LCM and model-ID-based LCM, respectively.

In the functionality-based LCM, a NW (for example, a base station/NW node) may indicate operation related to an AI/ML functionality (for example, at least one of activation, deactivation, fallback operation, and switch).

A UE may perform model-level LCM (for example, at least one of model switching and model selection) with a range of an indicated functionality.

For the range of the functionality, which model is activated/deactivated may be transparent.

Notification of a supported functionality may use reporting of UE capability information.

In the model-ID-based LCM, the NW (for example, the base station/NW node) may indicate, by using a model ID, operation related to an individual AI/ML model (for example, at least one of activation, deactivation, fallback operation, and switch).

The UE may perform model-level LCM (for example, at least one of model switching and model selection), based on indication by the NW.

The model may be defined in the NW by a model identifier (ID).

### (Cases Related to Model Delivery/Transfer)

Regarding model delivery/transfer, an existing scenario defines three cases for a case where the NW trains a model.

### {Case y}

First, the NW trains a model to perform model delivery to the UE outside of a 3GPP network based on offline engineering by a plurality of vendors.

Subsequently, the UE reports support of the delivered model (this step may be referred to as model identification).

### {Case z2}

First, the NW trains a model by using offline engineering by a plurality of vendors, and stores the model in a proprietary format. The proprietary format may mean a format defined for each vendor.

Subsequently, the UE reports, in a 3GPP network, use of the stored model (this step may be referred to as model identification).

Subsequently, model transfer is performed.

Subsequently, the UE reports support of the transferred model (this step may be referred to as model identification).

### {Case z4}

First, the UE reports a supported model structure (this step may be referred to as model identification).

Subsequently, the NW transfers a model parameter of the supported model structure.

Subsequently, the UE reports support of the transferred model (this step may be referred to as model identification).

### (Analysis)

For introduction of the above-described LCM, studies have not been sufficiently made on definition of a functionality. Also, studies have not been sufficiently made on what kind of information is included in the functionality.

Also, studies have not been sufficiently made on procedure/operation related to functionality identification.

For introduction of the above-described LCM, studies have not been sufficiently made on what is defined by a model ID. Also, studies have not been sufficiently made on what kind of information is related to a model ID.

Also, studies have not been sufficiently made on procedure/operation related to model identification.

Unless these studies are sufficient, a plurality of types of LCMs cannot be introduced appropriately, and thus preferable overhead reduction/channel estimation/resource use cannot be achieved, which may suppress improvement of communication throughput/communication quality.

In view of this, the inventors of the present invention came up with the idea of a method for solving these problems.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may refer to "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (for example, a message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, the channel measurement/estimation may be performed by using at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a reference signal for measurement (Sounding Reference Signal (SRS)), and the like, for example.

In the present disclosure, receive beam assumption, the number of receive beams, an index of a receive beam, receive beam selection, receive beam configuration, and receive beam indication may be interchangeably interpreted. In the present disclosure, a receive beam, a transmit beam, a DL receive beam, a DL transmit beam, a pair of a transmit beam and a receive beam may be interchangeably interpreted. In the present disclosure, a transmit/receive beam may be interpreted as a transmit/receive beam for beam prediction or a transmit/receive beam for CSI measurement/reporting for beam prediction, and vice versa.

### (Radio Communication Method)

A UE may perform at least one of first LCM operation and second LCM operation.

The UE may switch the first LCM operation and the second LCM operation, based on at least one of a specific rule, configuration/indication by higher layer signaling (RRC/MAC CE)/DCI, and reporting of UE capability information.

The first LCM may be, for example, an LCM based on a functionality. The second LCM may be, for example, an LCM based on a model ID.

The UE may receive at least one of the following as meta information.

Note that the name "meta information" in the present disclosure is merely an example, and the meta information may mean at least one of specific configuration information, scenario information, environment information, assistance information, and model information. In the present disclosure, meta information, configuration information, scenario information, environment information, assistance information, and model information may be interchangeably interpreted.

### {Meta Information}

The meta information used by the UE/NW may include at least one of information related to NW configuration/deployment, information related to an environment, information related to the AL/ML model on the NW side, and information related to the model requested by the NW.

The information related to NW configuration/deployment may include information related to an antenna configuration, for example.

The information related to an antenna configuration may indicate at least one of the number of horizontal/vertical antenna elements/panels, the number of ports, an antenna interval, an antenna position, a panel position, and transceiver unit (TxRU) mapping, for example.

The information related to NW configuration/deployment may include information related to a beam configuration, for example.

The information related to a beam configuration may include at least one of the beam width, the number of beams, and a beam direction, for example.

The information related to NW configuration/deployment may include information related to a TRP, for example.

The information related to a beam configuration may include at least one of the altitude of the TRP and relative locations of the multi-TRP, for example.

The information related to an environment may include information related to a deployment scenario, for example.

The information related to a deployment scenario may indicate at least one of an Urban Macro (UMa), an Urban Micro (Umi), and an indoor hotspot (InH), for example.

The information related to an environment may include information related to "indoor" or "outdoor", for example.

The information related to "indoor" or "outdoor" may indicate a probability of being indoors/outdoors, for example.

The information related to an environment may be information related to objects around the UE/base station, for example.

The information related to objects around the UE/base station may indicate deployment of the objects around the UE/base station, for example.

The information related to an environment may include a scenario configuration format (meta information) to be described below, for example.

A use case using the AI model may be associated with the scenario configuration format including long-term features (long-tern features).

Note that the long-term features may be interchangeably interpreted as short-term/medium-term/long-term features, simply features, or the like. The scenario configuration format may be interchangeably interpreted as meta information, a meta information format, a scenario and configuration format, a scenario construction format, a scenario format, a configuration format, a use case format, an environment format, a meta format, or the like. The format may be interchangeably interpreted as a type, a mode, a data, a configuration, or the like.

The features may include one or a plurality of combinations of the following elements.
- scenario/model (an Urban Macro (UMa), an Urban Micro (Umi), indoor, outdoor, an indoor hotspot (InH), or the like),
- frequency/frequency range,
- numerology (or a subcarrier spacing),
- distribution/set of general channel parameters (for example, inter-site distances (ISD), gNB height, delay spread, angle spread, Doppler spread, or the like) in a single scenario/model,
- UE distribution,
- UE speed,
- UE track,
- number of transmit beams/receive beams,
- UE rotation pattern,
- gNB/UE antenna configuration (for example, transmit and receive antenna vectors),
- the number of cells/number of sectors,
- bandwidth,
- UE payload,
- channel quality (for example, RSRP, SINR),
- beam configuration ID,
- physical cell ID (PCI),
- global cell ID (GCI),
- absolute radio frequency channel number (ARFCN),
- probability of Line Of Site (LOS)/Non-Line Of Site (NLOS).

It may be expected that the UE is configured/registered with a model whose associated scenario configuration format matches a configuration/status of the UE.

It may be expected that the UE activates a model whose associated scenario configuration format matches the configuration/status of the UE.

Correspondence between the use case and the scenario configuration format may be defined in standards, or information related to the correspondence may be notified to the UE. The features included in the scenario configuration format corresponding to the use case may be defined in standards, or information related to the features may be notified to the UE.

The information related to the AL/ML model on the NW side may include information related to paired models available on the NW side, for example.

The information related to paired models available on the NW side may indicate paired decoders for CSI compression, for example.

The information related to the AL/ML model on the NW side may include information related to preprocessing/post-processing available on the NW side, for example.

The information related to preprocessing/post-processing available on the NW side may include at least one of quantization/dequantization processing, DFT transform, IDFT transform, FFT transform, and IFFT transform, for example.

The information related to the model requested by the NW may include information to be described in at least one of the following options 0-A to 0-H, for example.

### {{Option 0-A}}

The UE may report information related to a function of the model.

The function of the model may be at least one of temporal beam prediction, spatial domain beam prediction, temporal CSI prediction, spatial CSI prediction, direct AI positioning, and AI-aided positioning, for example.

### {{Option 0-B}}

The UE may report information related to a predicted time offset.

The time offset may be a time offset between predicted CSI timing and the latest CSI-RS occasion later than a CSI reference resource, for example.

### {{Option 0-C}}

The UE may report the number of predicted beams.

The number of predicted beams may be the number of top K predicted beams as a result of model inference.

### {{Option 0-D}}

The UE may report at least one of a CSI compression rate and a bit length of coded bits.

### {{Option 0-E}}

The UE may report information of at least one of the AI/ML models to be described in Supplement 1 below.

### {{Option 0-F}}

The UE may report meta information to which a reported model is applicable.

In this case, a data set of meta IDs/meta information trained for a corresponding model may be collected.

### {{Option 0-G}}

The UE may report performance metrics that can be calculated in model monitoring.

### {{Option 0-H}}

The UE may report, when a plurality of AI/ML models are reported, priorities (priority levels) related to the plurality of AI/ML models.

According to option 0-H, the UE can prioritize a specific AI/ML model, based on a status (for example, power consumption/calculation resources) of the UE and complexity of the model.

In a case of option 0-H, the NW may or may not follow the reported priority.

### {Model Registration}

The UE may perform model registration.

In the present disclosure, model registration and model identification may be interchangeably interpreted.

The UE may report information on an available model. The UE may report the information on the available model by using the methods to be described in Supplement 3 below.

The available model may be, for example, a registerable model.

The UE may report a specific model. The UE may report at least one of the models to be described in options 0'-1 to 0'-3 below.

### {{Option 0'-1}}

The UE may report a model applicable to indicated meta information.

The indicated meta information may be, for example, the latest ((most) recent) indicated meta information.

The indicated meta information may be at least one of the above-described meta information.

### {{Option 0'-2}}

The UE may report an applicable model, based on a current UE status (state).

The UE status may be, for example, a status based on at least one of power consumption and calculation resources.

### {{Option 0'-3}}

The UE may report a plurality of available models.

For example, the UE may report all available models.

For example, the UE may report all the available models irrespective of meta information/UE status.

The UE may report specific information on an available model. The specific information (information related to the model) may be information to be described in at least one of options 0'-A to 0'-E below.

### {{Option 0'-A}}

The UE may report information related to a function of the model.

The function of the model may be at least one of temporal beam prediction, spatial domain beam prediction, temporal CSI prediction, spatial CSI prediction, direct AI positioning, and AI-aided positioning, for example.

### {{Option 0'-B}}

The UE may report information related to a predicted time offset.

The time offset may be a time offset between predicted CSI timing and the latest CSI-RS occasion later than a CSI reference resource, for example.

### {{Option 0'-C}}

The UE may report the number of predicted beams.

The number of predicted beams may be the number of top K predicted beams as a result of model inference.

### {{Option 0'-D}}

The UE may report at least one of a CSI compression rate and a bit length of coded bits.

### {{Option 0'-E}}

The UE may report information of at least one of the AI/ML models to be described in Supplement 1 below.

### {Assistance Information}

The UE may report assistance information/meta data (meta information) on an AI/ML model.

The AI/ML model may be an AI/ML model registered/configured/compiled/activated in the UE.

The assistance information/meta data on the AI/ML model may be transmitted together with or in place of beam information. The beam information may be, for example, information related to an antenna/beam of the UE.

The assistance information/meta data on the AI/ML model may be at least one of the following information.

The assistance information/meta data on the AI/ML model may be an AI/ML model ID.

The AI/ML model ID may be a global/local AI/ML model ID.

The assistance information/meta data on the AI/ML model may be information related to an applicable bandwidth corresponding to an AI/ML model ID.

The bandwidth may be indicated as a minimum/maximum applicable bandwidth.

The information related to the bandwidth may include, for example, information indicating a band indicator (for example, "freqBandIndicatorNR"). The information indicating the band indicator may be represented by a specific number of bits (for example, 10 bits).

The information related to the bandwidth may include, for example, information indicating a bandwidth of an RS associated with a corresponding AI/ML model (for example, "supportedBandwidth") .

The information indicating a bandwidth of an RS associated with a corresponding AI/ML model may indicate a frequency for each frequency range (for example, FR1/FR2 (FR2-1/FR2-2)/FR3/FR4/FR5).

The assistance information/meta data on the AI/ML model may be information related to an applicable area corresponding to an AI/ML model ID.

The information related to an applicable area corresponding to an AI/ML model ID may include at least one of the following information (information list):
- area ID,
- (NR) cell global ID,
- (NR) physical cell ID (Identifier),
- ARFCN (Absolute Radio Frequency Channel Number), and
- Evolved Cell global ID (ECGI).

The area ID may include at least one of the NR cell global ID, the NR physical cell ID, and the ARFCN.

The assistance information/meta data on the AI/ML model may be antenna configuration/beam information corresponding to an AI/ML model ID.

### <First Embodiment>

A first embodiment relates to an LCM based on a functionality.

In the present disclosure, the functionality may be simply interpreted as "function."

The first embodiment is broadly classified into Embodiments 1-1, 1-1', 1-2, and 1-3. A UE/NW may apply at least one of the methods to be described in Embodiments 1-1, 1-1', 1-2, and 1-3, or may apply at least two or more of the methods to be described in Embodiments 1-1, 1-1', 1-2, and 1-3 in combination.

### <<Embodiment 1-1>>

Embodiment 1-1 relates to definition of a functionality.

The UE may report a functionality to support (or supported).

The functionality may be associated with specific information. The functionality may include specific information. The functionality may belong to specific information.

In the present disclosure, "be associated with," "include," "belong to," and "correspond to" may be used interchangeably.

The specific information may be at least one of the following.

### {Information Related to Nominal Output}

The specific information may be information possible to be reported (for example, information related to a nominal output).

For example, the specific information may be information related to quality of a predicted reference signal.

For example, the information related to quality of a predicted reference signal may be at least one of predicted RSRP/SINR, predicted L1-RSRP/L1-SINR, top-X probability, and top-X'/1 probability.

The top-X probability of a certain resource among one or more resources may mean a probability/confidence level/confidence interval with RSRP or SINR corresponding to the certain resource greater than or equal to the X-th largest RSRP or SINR among RSRPs or SINRs corresponding to the one or more resources. This confidence interval may be a confidence interval of any percent (for example, 95%).

The top-X'/1 probability related to one or more resources may mean a probability/confidence level/confidence interval with which at least one of RSRPs corresponding to X' resources is the largest among RSRPs or SINRs corresponding to the one or more resources. This confidence interval may be a confidence interval of any percent (for example, 95%). Note that, in a case where different top-X'/1 probabilities can be obtained for the same value of X' depending on how resources are selected, any one of these values (for example, a maximum value) may be determined as the top-X'/1 probability.

Note that the information indicating the L1-RSRP/SINR, the top-X probability, or the top-X'/1 probability may include information (difference information) indicating a difference from another L1-RSRP/SINR, top-X probability, or top-X'/1 probability.

Information indicating the L1-RSRP/SINR, the top-X probability, and the top-X'/1 probability or difference information on these values may be quantized information (quantization information). The quantization information may correspond to information representing a difference of L1-RSRPs, top-X probabilities, top-X'/1 probabilities, or these values by using a specific number of bits sectioned by specific quantization resolution (for example, dB step size) for a specific representable range (a value indicated by the bits corresponds to any step (section)).

Note that it is preferable that the quantization information with the difference information be represented by the number of bits smaller than that of the quantization information with non-difference information (for example, lower quantization resolution or narrower representable range than the quantization information with non-difference information), but may be represented by the same or larger number of bits.

The information related to X, X', the specific range, the specific quantization resolution, the specific number, and the like may be notified from the network to the UE, may be defined in a standard, may be derived from a model (associated model) used for beam prediction, or may be determined based on other information in the same reporting instance.

For example, the specific information may be information related to a compressed precoding matrix/channel matrix. For example, the compressed information may be information representing a coefficient (for example, phase/amplitude) of a precoding matrix/channel matrix.

For example, the specific information may be at least one of UE location information and information assisting UE positioning.

For example, the information may be at least one of UE location information, LOS/NLOS identifier, reference signal time difference (RSTD), Time of Arrival (ToA), path phase, RSRPP (path-specific RSRP), high resolution of RSTD, likelihood (for example, probability) of ToA, and likelihood (for example, probability) of angle of departure (AoD)/angle of arrival (AoA).

### {Information Necessary for Measuring/Calculating/Estimating Nominal Output}

The specific information may be information necessary for measuring/calculating/estimating a nominal output. The information may be, for example, information related to a nominal input.

For example, the specific information may be configuration information for measurement of a specific reference signal (for example, a PRS/CSI-RS/SSB).

For example, the specific information may be information related to a measured value.

The information related to a measured value may be, for example, at least one of measured L1-RSRP/SINR, channel impulse response (CIR), Power delay profile (PDP), and RSRP/RSRPP/RSTD.

The CIR may be, for example, a coefficient (for example, phase/amplitude) per antenna port/time domain sample/TRP.

The PDP may be power strength per antenna port/time domain sample/TRP.

### {Information Related to Requirement of Quality/Amount/Drift of Nominal Output/Input}

The specific information may be information related to a requirement of quality/amount/drift of a nominal output/input.

The specific information may be, for example, information representing the number of/ratio between model inferences with which a nominal output/input satisfies specific quality. The specific quality may be defined, for example, as a value higher (or lower) than a specific threshold/offset.

The specific information may be, for example, information indicating distribution characteristics of a specific value. The "specific" may be, for example, all/some of characteristics of a nominal input/output. The value may indicate, for example, at least one of the mean or variation.

### {Information Related to Applicable Condition}

For example, the specific information may be information related to an applicable condition/configuration.

The specific information may be, for example, an applicable NW configuration. For example, an applicable parameter related to the NW configuration may be at least one of a system information parameter and an assistance information parameter.

The specific information may be, for example, an applicable UE configuration. For example, an applicable parameter related to the UE configuration may be a higher layer (for example, RRC) parameter.

The specific information may be, for example, information related to an applicable scenario. The information may be, for example, information indicating at least one of an NLOS/LOS, UE distribution, an SINR, RSRP, a bandwidth, a frequency, indoor/outdoor, and a deployment scenario (for example, at least one of an Urban Macro (UMa), an Urban Micro (Umi), and an indoor hotspot (InH)).

The specific information may be, for example, information related to applicable deployment. The information may be, for example, information indicating at least one of an applicable antenna configuration (for example, at least one of the number of antenna elements/panels in a horizontal/vertical direction, the number of ports, antenna spacing, an antenna position, a panel position, and transceiver unit (TxRU) mapping), a beam configuration (for example, at least one of a beam width, the number of beams, and a beam direction), and TRP information (for example, at least one of an altitude of a TRP and a relative position of a plurality of TRPs).

The specific information may be, for example, information related to an applicable site. The information may be, for example, information indicating at least one of an area ID, an NR cell global ID, an NR physical cell ID, a specific frequency (for example, ARFCN), and an ECGI.

The specific information may be, for example, information related to an applicable paired model. The paired model may be, for example, two (two or more) NW-side models (model combinations). The information may be, for example, information indicating a paired model for CSI compression.

The specific information may be, for example, information related to an applicable time. The information may be, for example, information indicating an applicable period (interval/duration). The period may be indicated, for example, by using a specific time unit (for example, slot/symbol/subslot/millisecond/second).

The applicable condition/configuration may be predefined in a specification or may be determined/identified by using a specific ID/token. For example, the applicable configuration/scenario/condition may be defined as a specific parameter (for example, a test parameter) or may be indicated by using a specific ID/token.

Performance (for example, prediction accuracy, position error) of the functionality may be assumed to be better (for example, higher) than a specific threshold under an applicable/specific condition/configuration. The specific condition/configuration may be, for example, a condition/configuration in a specific test.

The threshold/performance requirement may be predefined in a specification or may be determined/identified by using a specific ID/token.

In a case where the threshold/performance requirement is based on the specific ID/token, each vendor/operator can define and utilize a desired threshold/performance.

A configuration of the specific ID/token will be described below.

The UE/NW may follow one of options 1-1-1 to 1-1-6 below, or may apply at least two of options 1-1-1 to 1-1-6 in combination.

The specific ID may be at least one of an ID related to a scenario, an ID related to a configuration, an ID related to performance, an ID related to a performance requirement, and an ID related to a threshold. The ID configuration to be described below can also be appropriately applied to a model ID, a functionality ID, and a meta ID.

### {{Option 1-1-1}}

The specific ID may be defined/introduced in combination with other information/ID. The specific ID may be defined/introduced in other information/ID.

Information related to the specific ID received by the UE may include the specific ID and one or more pieces of other information/IDs.

For example, the specific ID may be defined in each area/MNO (for example, PLMN)/existing ID (for example, at least one ID used in existing NR above). In each area/MNO (for example, PLMN)/existing ID (for example, at least one ID used in existing NR above), the specific ID may be a unique ID.

The UE/NW may expect/assume/determine that the specific ID is a unique ID in each area/MNO/existing ID.

For example, when the specific ID is different, the UE may expect/assume/determine that the scenario/configuration/performance/performance requirement/threshold is different.

According to option 1-1-1, by combining the specific ID with other information/ID, unique model/meta information can be identified using a shorter length/sequence.

Note that, in the present disclosure, the area may be determined based on at least one of an MCC, an area ID, a set of area IDs, an NR cell global ID, an NR physical cell ID, an ARFCN, and an Evolved Cell global ID (ECGI). For example, regarding the same area, at least one of the MCC, the area ID, the set of area IDs, the NR cell global ID, the NR physical cell ID, the ARFCN, and the ECGI may be the same. In the present disclosure, the area, the MCC, the area ID, the set of area IDs, the NR cell global ID, the NR physical cell ID, the ARFCN, and the ECGI may be interchangeably interpreted.

The specific ID may be defined in the functionality/functionality ID.

For example, the UE/NW may expect/assume/determine that the specific ID is a unique ID in the functionality/functionality ID.

In this case, by identifying the functionality and the scenario/configuration/performance/performance requirement/threshold in combination, the length/sequence of the ID can be shortened, and overhead can be reduced.

### {{Option 1-1-2}}

The specific ID may be defined/introduced in combination with other information/ID. The specific ID may be defined/introduced in other information/ID.

For example, the specific ID may be defined in at least one of each area, vendor (for example, TAC) of the base station/LMF/UE, and existing ID (for example, at least one ID used in existing NR above). In at least one of each area, vendor of the base station/LMF/UE, and existing ID, the specific ID may be a unique ID.

The UE/NW may expect/assume/determine that the specific ID is a unique ID in at least one of each area, vendor (which may be interpreted as manufacturer) of the base station/LMF/UE, and existing ID.

For example, when the specific ID is different, the UE may expect/assume/determine that the scenario/configuration/performance/performance requirement/threshold is different.

According to option 1-1-2, for example, when the vendor determines the specific ID, the vendor/manufacturer can easily generate/introduce/define a unique ID.

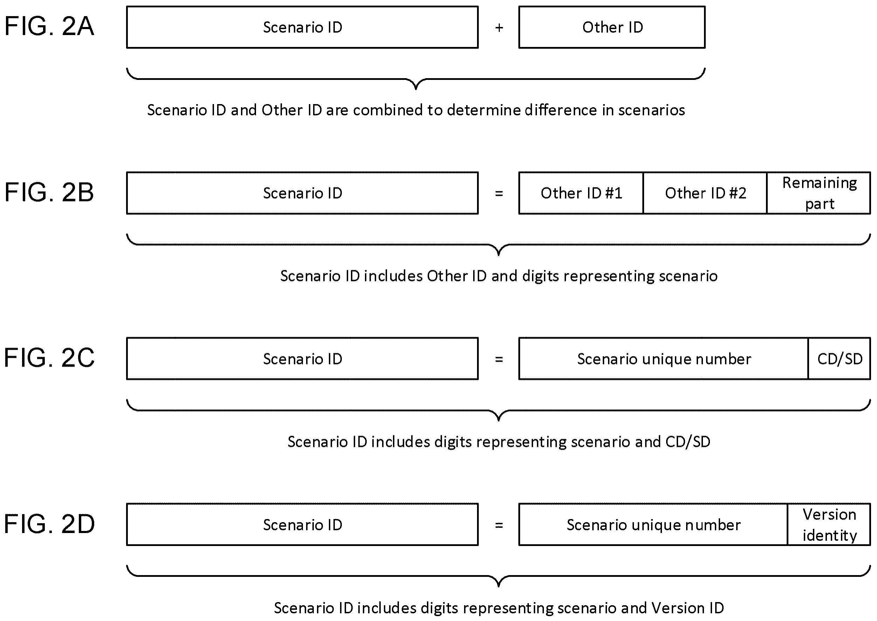

FIG. 2A is a diagram to show an example of the configuration of the specific ID according to option 1-1-1/1-1-2. Although FIG. 2A shows a case of the scenario ID, the ID is not limited to this example.

In the example shown in FIG. 2A, the scenario ID is defined in combination with another ID. In other words, the scenario ID is a unique ID in another ID. In this case, when a combination of the scenario ID and another ID is different, this means that the scenario is different.

### {{Option 1-1-3}}

The specific ID may include one or more other IDs.

The specific ID may include one or more other IDs.

Such other ID may be an existing ID (for example, at least one ID used in existing NR above), for example. For example, such other ID may be at least one of a TAC (Type allocation code), a vendor ID, and an area ID.

The UE may report the specific ID by using a specific part in the specific ID. The specific part may include one or more IDs constituting the specific ID.

For example, when the UE already reports a first part in the specific ID to the NW, the UE may perform a report regarding the specific ID by using parts (for example, a second part, a third part, ...) other than the first part constituting the specific ID.

By employing such construction, overhead of the report of the UE can be reduced.

For example, the UE may perform the report of the present embodiment in a specific procedure/operation (for example, at least one of an LCM procedure and transmission of supporting signaling).

The LCM procedure may be at least one of model monitoring, model activation, model deactivation, data collection, UE capability, and model training.

FIG. 2B is a diagram to show an example of the configuration of the specific ID according to option 1-1-3. Although FIG. 2B shows a case of the scenario ID, the ID is not limited to this example.

In the example shown in FIG. 2B, the scenario ID is constructed to include other IDs (ID #1 and ID #2) and the remaining part (for example, a part representing the scenario). The scenario ID may include other IDs and a part representing the scenario.

For example, in the example shown in FIG. 2B, when the UE already reports other ID #1 and ID #2, the UE may perform a report regarding the scenario ID by performing a report of only the remaining part.

### {{Option 1-1-4}}

The specific ID may include CD (Check digits)/SD (Spare digits).

The CD/SD may be used for authentication of the ID, for example.

The value/bits of the CD/SD may be determined based on a specific rule (for example, the Luhn algorithm).

FIG. 2C is a diagram to show an example of the configuration of the specific ID according to option 1-1-4. Although FIG. 2C shows a case of the scenario ID, the ID is not limited to this example.

In the example shown in FIG. 2C, the scenario ID is constructed to include scenario-unique bits/number and the CD/SD.

According to option 1-1-4, authentication/check of the specific ID can be appropriately performed.

### {{Option 1-1-5}}

The specific ID may be constructed to include an identifier (which may be referred to as a version ID, for example) indicating a version.

The identifier indicating a version may be an identifier based on update of information on the specific ID, for example.

The UE/NW may expect/assume/determine sharing/use/measurement/input/output of information on the specific ID, based on a specific part included in the specific ID.

The specific part may be a part other than the version ID included in the specific ID, for example.

For example, when the specific part included in the specific ID is the same, the UE/NW may expect/assume/determine that information on the corresponding specific ID shares the same functionality.

For example, when the specific part included in the specific ID is the same, the UE/NW may expect/assume/determine that information on the corresponding specific ID is not simultaneously used.

For example, when the specific part included in the specific ID is the same, the UE/NW may expect/assume/determine that information on the corresponding specific ID requires the same input/measurement for a specific use case.

For example, when the specific part included in the specific ID is the same, the UE/NW may expect/assume/determine that information on the corresponding specific ID can derive/acquire the same output type from a specific use case.

FIG. 2D is a diagram to show an example of the configuration of the specific ID according to option 1-1-5. Although FIG. 2D shows a case of the scenario ID, the ID is not limited to this example.

In the example shown in FIG. 2D, the scenario ID is constructed to include scenario-unique bits/number and the version ID.

According to option 1-1-5, even when information on the specific ID is updated, the update can be indicated by the version ID, and therefore identification of the information on the specific ID, even of a different version, can be performed using common information.

### {{Option 1-1-6}}

A length of the specific ID may be defined/configured.

For example, the length of the specific ID may be defined in specifications in advance. By employing such construction, signaling between the UE and the NW can be facilitated.

For example, the length of the specific ID may be configured based on a specific method. The specific method may be at least one of the methods to be described in Supplement 2 below, for example. By employing such construction, flexible signaling between the UE and the NW can be implemented.

A length of an ID (for example, another ID/SD/CD/version ID) constituting the specific ID may be defined/configured.

For example, the length of the ID constituting the specific ID may be defined in specifications in advance.

For example, the length of the ID constituting the specific ID may be configured based on a specific method. The specific method may be at least one of the methods to be described in Supplement 2 below, for example.

### {Information Related to Processing Apparatus}

The specific information may be information related to processing apparatus (processing unit) (for AI/ML). In the present disclosure, processing apparatus and a processing unit may be interchangeably interpreted.

As the processing unit, at least one of a CSI processing unit (CPU), a general processing unit (GPU), a neural network processing unit (NPU), and an AI/ML processing unit (APU) may be used.

The processing apparatus (processing unit) may be, for example, the number of processing units necessary for at least one of performing functionality and computing/reporting a nominal output.

### {Information Related to Processing Time}

The specific information may be information related to processing time.

The processing time may be processing time necessary for at least one of performing functionality and computing/reporting a nominal output or may be time to occupy a processing unit, for example.

The processing time may be indicated, for example, by using a specific time unit (for example, slot/symbol/subslot/millisecond/second).

### {Information Related to Use of Supported Functionality}

The specific information may be information related to use of a supported functionality. The information may include, for example, information indicating whether the supported functionality is currently available.

When the information is absent, the UE may report, in reporting of the supported functionality, only an available functionality.

Note that, in the present disclosure, the functionality may correspond to at least one of a feature group set, a feature group, a component, and a candidate value of a component in UE capability (UE feature capability).

According to Embodiment 1-1 described above, a functionality can be appropriately defined.

### <<Embodiment 1-1'>>

Embodiment 1-1' relates to reporting of a functionality.

The UE may report a functionality (for example, supported functionality/functionality to support).

The UE may report the functionality according to one or a combination of alternatives 1-1'-1 and 1-1'-2 below.

For example, a first mode corresponding to alternative 1-1'-1 below and a second mode corresponding to alternative 1-1'-2 below may be switched by using higher layer signaling (for example, RRC/MAC CE)/DCI.

### {Alternative 1-1'-1}

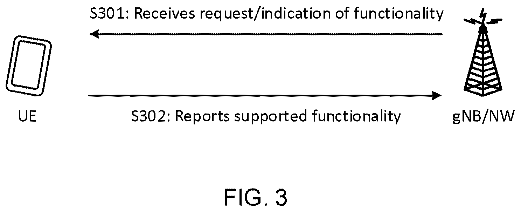

The UE may receive an indication of/request for reporting of the functionality (see FIG. 3, Step S301).

The NW may transmit the indication/request, based on at least one of occurrence of a specific event, a specific condition, and a specific periodicity.

For example, the UE may receive the indication of reporting of the functionality according to at least one of the methods to be described in Supplement 2 below.

For example, the UE may receive the indication by using at least one of UE-dedicated signaling and signaling common to a plurality of UEs.

The dedicated signaling may be, for example, signaling based on a UE capability request. The common signaling may be, for example, at least one of system information (for example, a system information block) and group common signaling (for example, broadcast/multicast).

The indication may include information indicating what type of supported functionality is to be reported.

The information may indicate, for example, what type of functionality the functionality is.

The information may indicate, for example, specific information possible to be reported by using the functionality.

The information may indicate specific information necessary for measuring/calculating/estimating a nominal output for the functionality.

The information may indicate a specific condition under which the functionality is applicable.

The NW (for example, the base station) may request the UE to report a plurality of (for example, all) functionalities supported by the UE. The UE may report a plurality of (for example, all) supported functionalities.

The UE may report the functionality in response to a received indication/request (see FIG. 3, Step S302).

The UE may transmit a report of the functionality according to at least one of the methods to be described in Supplement 3 below.

### {Alternative 1-1'-2}

The UE may start reporting of the functionality.

The UE may determine a start of reporting of the functionality, based on occurrence of a specific event or on a specific condition.

The specific event or the specific condition may be predefined in a specification. The specific event or the specific condition may be, for example, at least one of a case corresponding to a case where a functionality to be reported is different from a currently supported functionality and a case where a supported functionality has been changed.

The UE may transmit a report of/request for the functionality.

The UE may transmit a report of/request for the functionality according to at least one of the methods to be described in Supplement 3 below.

The report of/request for the functionality may include at least one of a supported functionality and a request for reporting of a supported functionality.

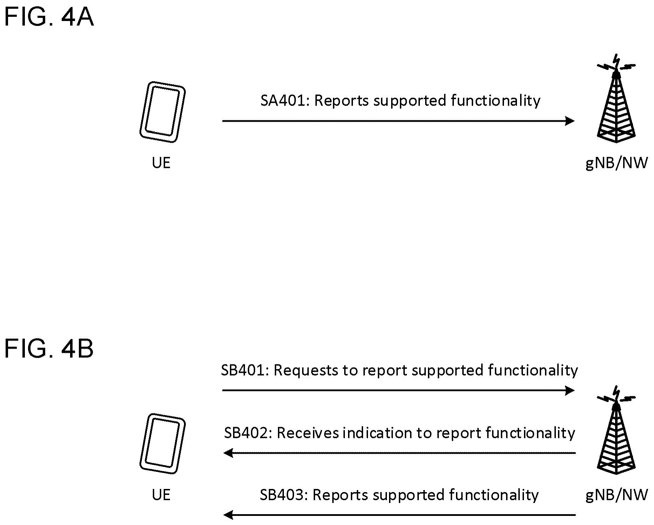

For example, the UE may transmit a report of the functionality (see FIG. 4A, Step SA401).

For example, the UE may transmit a request for reporting of the functionality (see FIG. 4B, Step SB401). Subsequently, the UE may receive, from the base station, an indication of reporting of information indicating a requested functionality (see FIG. 4B, Step SB402). Subsequently, the UE may transmit a report of the supported functionality (see FIG. 4B, Step SB403).

According to Embodiment 1-1' described above, reporting of a functionality by the UE can be appropriately performed.

### <<Embodiment 1-2>>

Embodiment 1-2 relates to operation for LCM based on a functionality.

The UE may receive an indication related to functionality operation. The indication may be transmitted according to at least one of the methods to be described in Supplement 2 below, for example.

The operation may be, for example, at least one of activation, deactivation, fallback, and switch.

Note that, in the present disclosure, one model/functionality may be associated with one fallback operation, or a plurality of models/functionalities may be associated with one fallback operation.

Based on the indication, the UE may judge/determine at least one of which functionality is to be used and which operation related to which functionality (for example, fallback operation) is to be performed.

The indication may include at least one of the following information:
- information related to indicated functionality,
- information related to indicated/configured applicable condition,
- information related to occupied/remaining processing apparatus (processing unit),
- information related to required timeline, and
- information related to required quality/amount/drift of nominal input/output.

The information related to an indicated/configured applicable condition may indicate at least one of a configuration ID, a scenario ID, a deployment ID, a site ID, and a model ID indicated in functionality indication by the NW. The model ID may be, for example, a mode ID of a NW-side paired model.

For example, the UE may judge/determine, based on the information related to occupied/remaining processing apparatus, functionality so that unoccupied processing apparatus is larger than processing apparatus requiring the functionality.

For example, the UE may judge/determine, based on the information related to a required timeline, functionality so that a timeline (minimum requirement) for reporting/calculation of a nominal output is satisfied depending on processing time related to the functionality.

For example, the UE may judge/determine, based on the information related to required quality/amount/drift of a nominal input/output, functionality so that an obtained input/output satisfies a requirement.

According to Embodiment 1-2 described above, judgment/determination of operation related to LCM based on a functionality can be appropriately performed.

### <<Embodiment 1-3>>

The UE may perform, based on the information/judgment/determination described in Embodiment 1-2 above, operation related to a functionality (for example, at least one of activation, deactivation, fallback, and switch).

According to the first embodiment described above, operation related to LCM based on a functionality can be appropriately performed.

### <Second Embodiment>

A second embodiment relates to LCM based on a model ID.

The second embodiment is broadly classified into Embodiments 2-1, 2-1', 2-2, and 2-3. A UE/NW may apply at least one of the methods to be described in Embodiments 2-1, 2-1', 2-2, and 2-3, or may apply at least two or more of the methods to be described in Embodiments 2-1, 2-1', 2-2, and 2-3 in combination.

### <<Embodiment 2-1>>

Embodiment 2-1 relates to definition of a model.

The UE may report a model to support (or supported). The model may be identified by a model ID.

The model ID may be associated with specific information. The model ID may include specific information. The model may belong to specific information.

The specific information may be at least one of the following.

### {Information Related to Nominal Output}

The specific information may be information possible to be reported (for example, information related to a nominal output).

At least one of the pieces of information described in Embodiment 1-1 above may be applied to the information related to a nominal output.

### {Information Necessary for Measuring/Calculating/Estimating Nominal Output}

The specific information may be information necessary for measuring/calculating/estimating a nominal output. The information may be, for example, information related to a nominal input.

At least one of the pieces of information described in Embodiment 1-1 above may be applied to the information related to a nominal input.

### {Information Related to Applicable Condition}

For example, the specific information may be information related to an applicable condition/configuration.

At least one of the pieces of information described in Embodiment 1-1 above may be applied to the information related to an applicable condition/configuration.

### {Information Related to Processing Apparatus}

The specific information may be information related to processing apparatus (processing unit) (for AI/ML).

At least one of the pieces of information described in Embodiment 1-1 above may be applied to the information related to processing apparatus.

### {Information Related to Processing Time}

The specific information may be information related to processing time.

At least one of the pieces of information described in Embodiment 1-1 above may be applied to the information related to processing time.

Model information (AI/ML model information) may be at least one of the pieces of information to be described in Supplement 1 below.

The model/model information may be associated with the one or plurality of functionalities described in the first embodiment above.

The UE may report a model supported by using a model ID.

Granularity of the model ID will be described below.

### {Option 2-1-1}

One model ID may correspond to one model structure/model parameter.

For example, when a model is transferred from one entity to another entity, one model ID may be assigned to one model structure/model parameter.

The one model ID may be associated with one or more functionalities. The one model ID may include one or more functionalities.

The UE may report a model structure to support (option 2-1-1-1). The reporting may be performed, for example, by using a model ID. Reporting of the model structure may be performed separately from reporting of the model parameter.

In option 2-1-1-1, the NW may transfer, to the UE, a model parameter corresponding to the reported supported model structure.

In option 2-1-1-1, the UE may expect/assume that the transferred model parameter is applicable to the reported model structure supported by the UE.

The UE may report a model structure and a model parameter (option 2-1-1-2). The reporting may be performed, for example, by using a model ID.

### {Option 2-1-2}

One model ID may belong to one functionality.

For example, when a specific model is transferred from one entity to another entity, and the specific model includes a plurality of functionalities, a plurality of model IDs may be assigned to one model structure/model parameter.

The one model ID may be associated with one functionality. The one model ID may include one functionality.

The UE may report a model corresponding to an applicable functionality.

According to Embodiment 2-1 described above, a model can be appropriately defined.

### <<Embodiment 2-1'>>

Embodiment 2-1' relates to reporting of model information/model ID.

The UE may report model information/model ID (for example, supported model information/ID/model information/ID to support).

The present embodiment may be applied by interpreting the "functionality" in Embodiment 1-1' above as "model information/model ID."

According to Embodiment 2-1', reporting of model information/model ID by the UE can be appropriately performed.

### <<Embodiment 2-2>>

Embodiment 2-2 relates to operation for LCM based on a model ID.

The UE may receive an indication related to operation based on a model/model ID. The indication may be transmitted according to at least one of the methods to be described in Supplement 2 below, for example.

The operation may be, for example, at least one of activation, deactivation, fallback, and switch.

Based on the indication, the UE may judge/determine at least one of which model/model ID is to be used and which operation related to which model/model ID (for example, activation) is to be performed.

The indication may include at least one of the following information:
- indicated model ID,
- information related to indicated functionality,
- information related to indicated/configured applicable condition,
- information related to occupied/remaining processing apparatus,
- information related to required timeline, and
- information related to required quality/amount/drift of nominal input/output.

The information related to an indicated/configured applicable condition may indicate at least one of a configuration ID, a scenario ID, a deployment ID, a site ID, and a model ID indicated in model indication by the NW. The model ID may be, for example, a mode ID of a NW-side paired model.

For example, the UE may judge/determine, based on the information related to occupied/remaining processing apparatus, a model/model ID so that unoccupied processing apparatus is larger than processing apparatus requiring the functionality/model.

For example, the UE may judge/determine, based on the information related to a required timeline, a model/model ID so that a timeline (minimum requirement) for reporting/calculation of a nominal output is satisfied depending on processing time related to the functionality/model.

For example, the UE may judge/determine, based on the information related to required quality/amount/drift of a nominal input/output, a model/model ID so that an obtained input/output satisfies a requirement.

According to Embodiment 2-2 described above, judgment/determination of operation related to LCM based on a model ID can be appropriately performed.

### <<Embodiment 2-3>>

The UE may perform, based on the information/judgment/determination described in Embodiment 2-2 above, operation based on a model/model ID (for example, at least one of activation, deactivation, fallback, and switch).

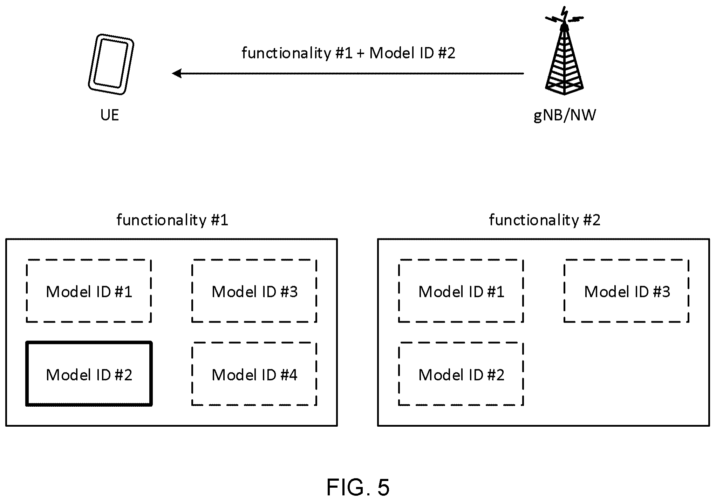

FIG. 5 is a diagram to show an example of the LCM operation according to the second embodiment. In the example shown in FIG. 5, model IDs #1 to #4 and model IDs #1 to #3 correspond to functionality #1 and functionality #2, respectively.

The UE receives, from the NW, an indication related to functionality #1 and an indication related to model ID #2. In this case, the UE performs operation related to LCM by using model ID #2 associated with functionality #1.

According to the second embodiment described above, operation related to LCM based on a model ID can be appropriately performed.

### <Supplements>

### {Supplement 1: AI Model Information}

In the present disclosure, AI model information may refer to information including at least one of the following:
- information of an input/output of an AI model,
- information of preprocessing/post-processing for an input/output of an AI model,
- information of parameters of an AI model,
- training information for an AI model,
- inference information for an AI model, and
- performance information related to an AI model.

Here, the information of an input/output of AI model may refer to information including at least one of the following:
- contents of input/output data (for example, RSRP, SINR, amplitude/phase information in a channel matrix (or precoding matrix), information related to an angle of arrival (AoA), information related to an angle of departure (AoD), location information),
- auxiliary information of data (which may be referred to as meta information),
- a type of input/output data (for example, an immutable value, a floating-point value),
- a bit width of input/output data (for example, 64 bits for each input value),
- a quantization interval of input/output data (a quantization step size) (for example, 1 dBm for L1-RSRP), and
- a possible range of input/output data (for example, [0, 1]).

Note that in the present disclosure, the information related to the AoA may include information related to at least one of an azimuth angle of arrival and a zenith angle of arrival (ZoA). The information related to the AoD may include information related to at least one of, for example, an azimuth angle of departure and a zenith angle of departure (ZoD).

In the present disclosure, the location information may be location information related to the UE/NW. The location information may include at least one of information (for example, a latitude, a longitude, or an altitude) obtained by using a positioning system (for example, satellite positioning system (such as Global Navigation Satellite System (GNSS) and Global Positioning System (GPS)), information of a BS adjacent to the UE (or a serving BS) (for example, an identifier (ID) of the BS/cell, a distance between the BS and the UE, a direction/angle of the BS (UE) when viewed from the UE (BS), coordinates of the BS (UE) when viewed from the UE (BS) (for example, the X/Y/Z-axis coordinates) or the like), a specific address (for example, an Internet Protocol (IP) address) of the UE, and the like. The location information of the UE is not limited to information with reference to the location of the BS and may be information with reference to a specific point.

The location information may include information related to the implementation of the UE itself (for example, the location (position)/direction of an antenna, the location/direction of an antenna panel, the number of antennas, the number of antenna panels, or the like).

The location information may include mobility information. The mobility information may include information indicating at least one of information indicating a mobility type, a moving speed of the UE, an acceleration of the UE, a moving direction of the UE, and the like.

Here, the mobility type may correspond to at least one of fixed location UE, movable/moving UE, no mobility UE, low mobility UE, middle mobility UE, high mobility UE, cell-edge UE, not-cell-edge UE, and the like.

In the present disclosure, environment information (for data) may be information related to an environment in which data is acquired/used, and may correspond to, for example, frequency information (a band ID or the like), environment type information (information indicating at least one of indoor, outdoor, Urban Macro (UMa), Urban Micro (Umi), and the like), information indicating a Line Of Site (LOS)/Non-Line Of Site (NLOS), or the like.

Here, the LOS may mean that the UE and the BS are in an environment in which both can have unobstructed views of each other (or there is no obstruction), and the NLOS may mean that the UE and the BS are not in an environment in which both can have unobstructed views of each other (or there is an obstruction). Information indicating the LOS/NLOS may indicate a soft value (for example, a probability of the LOS/NLOS), or may indicate a hard value (for example, one of the LOS/NLOS).

In the present disclosure, the meta information may mean information related to input/output information appropriate for the AI model, information related to acquired/acquirable data, or the like, for example. The meta information may specifically include information related to a beam of an RS (for example, a CSI-RS/SRS/SSB or the like) (for example, an angle of a direction of each beam, a 3dB beam width, the shape of a directed beam, the number of beams), layout information of an antenna of the gNB/UE, frequency information, environment information, a meta information ID, and the like. Note that the meta information may be used as an input/output of the AI model.

The information of preprocessing/post-processing for an input/output of an AI model described above may include information related to at least one of the following:
- whether to apply normalization (for example, Z score normalization (standardization), minimum-maximum (min-max) normalization),
- parameters for normalization (for example, a mean/variance for Z score normalization, a minimum/maximum value for min-max normalization),
- whether to apply a specific numerical inversion method (for example, one hot encoding, label encoding, and the like), and
- a selection rule whether to be used as training data.

For example, the Z score normalization as the preprocessing may be performed on input information x to obtain normalized input information x_{new} (x_{new} = (x - µ)/σ, where µ represents a mean of x, σ represents a standard deviation) and the obtained normalized input information x_{new} may be input to an AI model, and the post-processing may be performed on an output yₒᵤₜ from the AI model to obtain a final output y.

The information of parameters of an AI model described above may include information related to at least one of the following:
- weight (for example, a coefficient (coupling coefficient) of a neuron) information in an AI model,
- a structure of an AI model,
- a type of an AI model as a model component (for example, Residual Network (ResNet), DenseNet, RefineNet, a transformer model, CRBlock, a recurrent neural network (RNN), a long short-term memory (LSTM), a gated recurrent unit (GRU)), and
- a function of an AI model as a model component (for example, decoder, encoder).

Note that the weight information in an AI model may include information related to at least one of the following:
- a bit width (size) of the weight information,
- a quantization interval of the weight information,
- granularity of the weight information,
- a possible range of the weight information,
- parameters of a weight in an AI model,
- information of a difference from a pre-updated AI model (in a case of updating) and,
- a weight initialization method (for example, zero-initialization, random initialization (based on normal distribution/uniform distribution/truncated normal distribution), Xavier initialization (for sigmoid function), He initialization (for rectified linear units (ReLU)).

The structure of an AI model described above may include information related to at least one of the following:
- the number of layers,
- a type of a layer (for example, a convolutional layer, an activation layer, a dense layer, a normalization layer, a pooling layer, an attention layer),
- layer information,
- time series-specific parameters (for example, bidirectionality, time step), and
- parameters of training (for example, a type of a function (L2 regularization, dropout function, and the like), where to arrange this function (for example, after which layer)).

The layer information may include information related to at least one of the following:
- the number of neurons in each layer.
- a kernel size,
- a stride for pooling layer/convolutional layer,
- a pooling method (MaxPooling, AveragePooling, and the like),
- information of a residual block,
- the number of heads,
- a normalization method (batch normalization, instance normalization, layer normalization, and the like), and
- an activation function (sigmoid, tanh function, ReLU, leaky ReLU information, Maxout, Softmax).

An AI model may be included as a component of another AI model. For example, an AI model may be an AI model in which processing proceeds in order of a ResNet that is model component #1, a transformer model that is model component #2, a dense layer, and a normalization layer.

Training information for the above AI model may include information related to at least one of the following:
- information for an optimization algorithm (for example, a kind of optimization (stochastic gradient descent (SGD)), AdaGrad, Adam, and the like), parameters for optimization (learning rate, momentum information, and the like),
- information of a loss function (for example, information related to a loss function indexes (metrics) (mean absolute error (MAE)), mean square error (MSE), a cross-entropy loss, NLLLoss, Kullback-Leibler (KL) divergence, and the like),
- parameters to be frozen for training (for example, a layer, a weight),
- parameters to be updated (for example, a layer, a weight),
- parameters to be initial parameters (to be used as initial parameters) for training (for example, a layer, a weight), and
- a method of training/updating an AI model (for example, the (recommended) number of epochs, a batch size, the number of pieces of data used for training).

The inference information for an AI model described above may include information related to decision tree branch pruning, parameter quantization, the function of the AI model, and the like. Here, the function of the AI model may correspond to at least one of time domain beam prediction, spatial domain beam prediction, an autoencoder for CSI feedback, an autoencoder for beam management, and the like, for example.

The autoencoder for CSI feedback may be used as follows:
- The UE transmits, as the CSI feedback (CSI report), encoded bits output by inputting CSI/channel matrix/precoding matrix to an AI model of the encoder.
- The BS reconfigures the CSI/channel matrix/precoding matrix output by inputting the received encoded bits to the AI model of the decoder.

In spatial domain beam prediction, the UE/BS may input measurement results (beam quality, for example, RSRP) based on a sparse (or wide) beam into the AI model, and output dense (or narrow) beam quality.

In time domain beam prediction, the UE/BS may input time-series (past, present, or the like) measurement results (beam quality, for example, RSRP) into the AI model, and output future beam quality.

The performance information related to an AI model descried above may include information related to an expected value of a loss function defined for the AI model.

The AI model information in the present disclosure may include information related to an application range (applicable range) of the AI model. The application range may be indicated by a physical cell ID, a serving cell index, or the like. The information related to the application range may be included in the environment information described above.

The AI model information related to a specific AI model may be predefined in a standard, or the UE may be notified of the AI model information from a network (NW). The AI model defined in a standard may be referred to as a reference AI model. The AI model information related to the reference AI model may be referred to as reference AI model information.

Note that the AI model information in the present disclosure may include an index for specifying an AI model (which may be referred to as an AI model index, an AI model ID, a model ID, or the like, for example). The AI model information in the present disclosure may include the AI model index in addition to/instead of the information of an input/output of an AI model described above. Association of the AI model index with the AI model information (for example, the information of an input/output of an AI model) may be predefined in a standard, or the UE may be notified of the association from the NW.

The AI model information in the present disclosure may be associated with the AI model, and may be referred to as AI model relevant information, simply relevant information, or the like. The AI model relevant information need not explicitly include information for identifying the AI model. The AI model relevant information may be information including only the meta information, for example.

In the present disclosure, the model ID may be interchangeably interpreted as an ID (model set ID) corresponding to a set of AI models. In the present disclosure, the model ID may be interchangeably interpreted as the meta information ID. As described above, the meta information (or the meta information ID) may be associated with the information related to a beam (beam configuration). For example, the meta information (or the meta information ID) may be used by the UE to select the AI model by considering which beam is used by the BS, or may be used for notification as to which beam the BS is to use in order to apply the AI model deployed by the UE. Note that, in the present disclosure, the meta information ID may be interchangeably interpreted as an ID (meta information set ID) corresponding to a set of the meta information.

### {Supplement 2: Notification of Information to UE}

Notification of any information to a UE (from an NW) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Supplement 3: Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied, for example, only to a UE that has reported such a specific UE capability as that described below or that supports the specific UE capability (the following is merely an example):
- supporting of LCM based on a functionality
- supporting of LCM based on a model ID

The specific UE capability may indicate supporting of specific processing/operation/control/information for at least one of the above-described embodiments/options/alternatives.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of LCM based on a functionality/model ID, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes A)

The following invention is supplemented for one embodiment of the present disclosure.

### {Supplementary Note A-1}

A terminal including:
a transmitting section that performs reporting of a supported functionality;
a receiving section that receives an indication of at least one of activation, deactivation, fallback, and switch of a functionality; and
a control section that performs, based on the indication, at least one of the activation, the deactivation, the fallback, and the switch.

### {Supplementary Note A-2}

The terminal according to supplementary note A-1, wherein the reporting includes at least one of information related to a nominal output, information necessary for at least one of measurement, calculation, and estimation of a nominal output, information related to a requirement of at least one of quality, amount, and drift of at least one of a nominal output and a nominal input, information related to a condition for an applicable functionality, information related to processing apparatus, information related to processing time, and information related to use of the supported functionality.

### {Supplementary Note A-3}

The terminal according to supplementary note A-1 or A-2, wherein
the receiving section receives a request for the reporting, and
the transmitting section performs the reporting, based on the request.

### {Supplementary Note A-4}

The terminal according to any one of supplementary notes A-1 to A-3, wherein the transmitting section performs the reporting, based on at least one of occurrence of a specific event and a specific condition.

### (Supplementary Notes B)

The following invention is supplemented for one embodiment of the present disclosure.

### {Supplementary Note B-1}

A terminal including:
a transmitting section that performs reporting of a supported model identifier (ID);
a receiving section that receives an indication of at least one of activation, deactivation, fallback, and switch of a model; and
a control section that performs, based on the indication, at least one of the activation, the deactivation, the fallback, and the switch.

### {Supplementary Note B-2}

The terminal according to supplementary note B-1, wherein the reporting includes at least one of information related to a nominal output, information necessary for at least one of measurement, calculation, and estimation of a nominal output, information related to a condition for an applicable model ID, information related to processing apparatus, and information related to processing time.

### {Supplementary Note B-3}

The terminal according to supplementary note B-1 or B-2, wherein
one model ID corresponds to at least one of one model structure and model parameter, and
the one model ID corresponds to one or more functionalities.

### {Supplementary Note B-4}

The terminal according to any one of supplementary notes B-1 to B-3, wherein the one model ID corresponds to one functionality.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

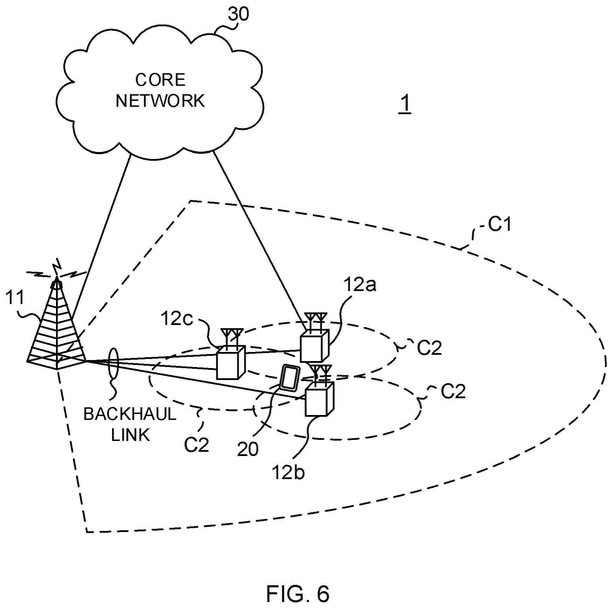

FIG. 6 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR), and so on, whose specifications have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

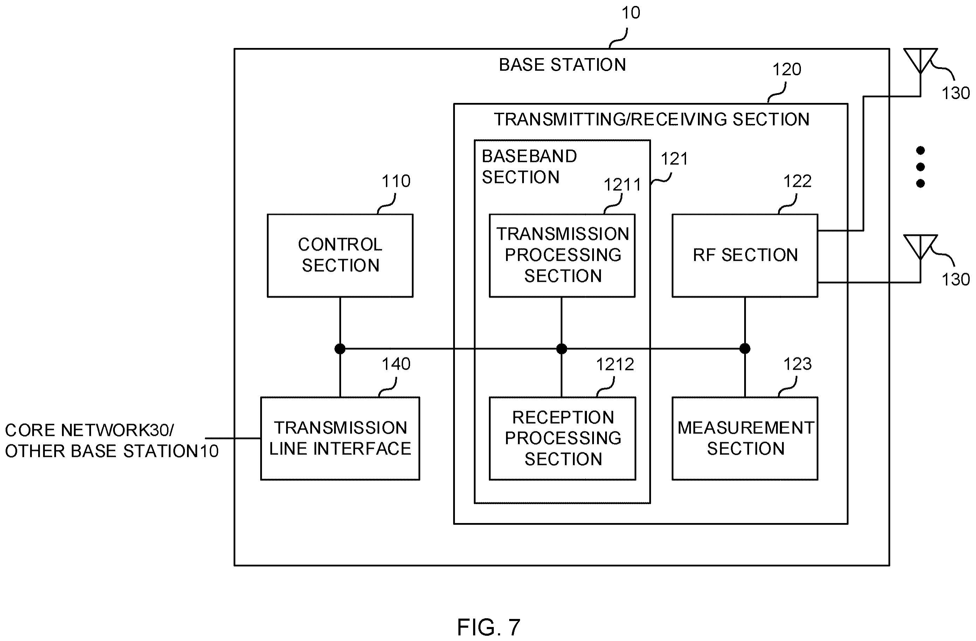

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive a report of a supported functionality. The transmitting/receiving section 120 may transmit an indication of at least one of activation, deactivation, fallback, and switch of a functionality. The control section 110 may indicate, by using the indication, at least one of the activation, the deactivation, the fallback, and the switch (first embodiment).

The transmitting/receiving section 120 may receive a report of a supported model identifier (ID). The transmitting/receiving section 120 may transmit an indication of at least one of activation, deactivation, fallback, and switch of a model. The control section 110 may indicate, by using the indication, at least one of the activation, the deactivation, the fallback, and the switch (second embodiment).

### (User Terminal)

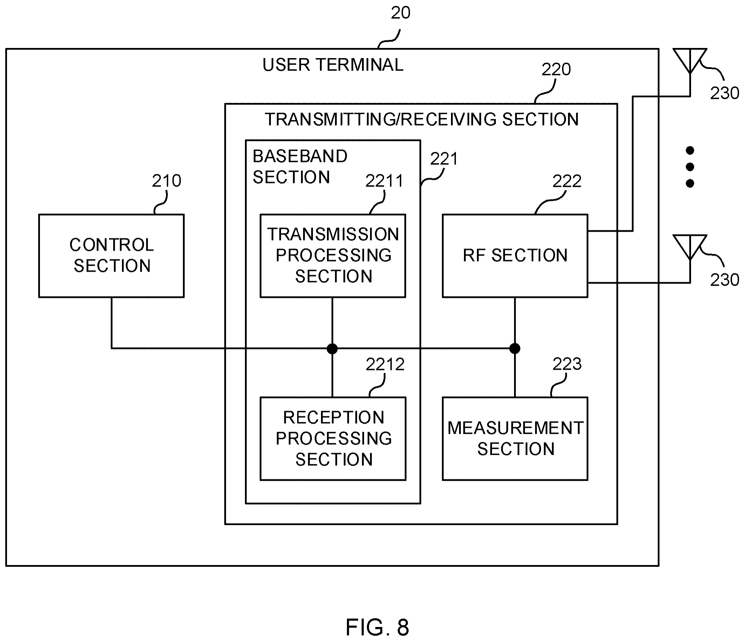

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on resources for channel measurement. The resources for channel measurement may be non zero power (NZP) CSI-RS resources, for example. The measurement section 223 may derive interference measurement for CSI calculation, based on resources for interference measurement. The resources for interference measurement may be at least one of NZP CSI-RS resources for interference measurement, CSI-interference measurement (IM) resources, and the like. Note that CSI-IM may be referred to as CSI-interference management (IM), or may be interchangeably interpreted as a zero power (ZP) CSI-RS. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may perform reporting of a supported functionality. The transmitting/receiving section 220 may receive an indication of at least one of activation, deactivation, fallback, and switch of a functionality. The control section 210 may perform, based on the indication, at least one of the activation, the deactivation, the fallback, and the switch (first embodiment).

The reporting may include at least one of information related to a nominal output, information necessary for at least one of measurement, calculation, and estimation of a nominal output, information related to a requirement of at least one of quality, amount, and drift of at least one of a nominal output and a nominal input, information related to a condition for an applicable functionality, information related to processing apparatus, information related to processing time, and information related to use of the supported functionality (first embodiment).

The transmitting/receiving section 220 may receive a request for the reporting, and may perform the reporting, based on the request (first embodiment).

The transmitting/receiving section 220 may perform the reporting, based on at least one of occurrence of a specific event and a specific condition.

The transmitting/receiving section 220 may perform reporting of a supported model identifier (ID). The transmitting/receiving section 220 may receive an indication of at least one of activation, deactivation, fallback, and switch of a model. The control section 210 may perform, based on the indication, at least one of the activation, the deactivation, the fallback, and the switch (second embodiment).

The reporting may include at least one of information related to a nominal output, information necessary for at least one of measurement, calculation, and estimation of a nominal output, information related to a condition for an applicable model ID, information related to processing apparatus, and information related to processing time (second embodiment).

One model ID may correspond to at least one of one model structure and model parameter. The one model ID may correspond to one or more functionalities (second embodiment).

The one model ID may correspond to one functionality (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

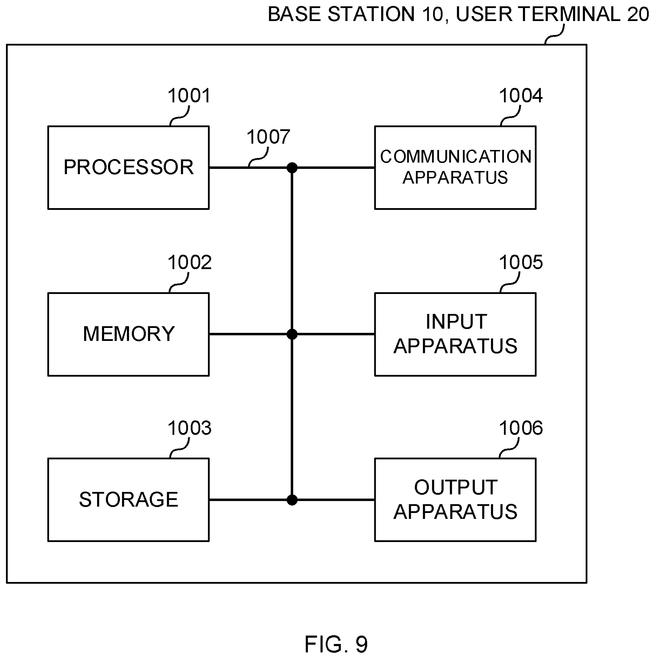

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

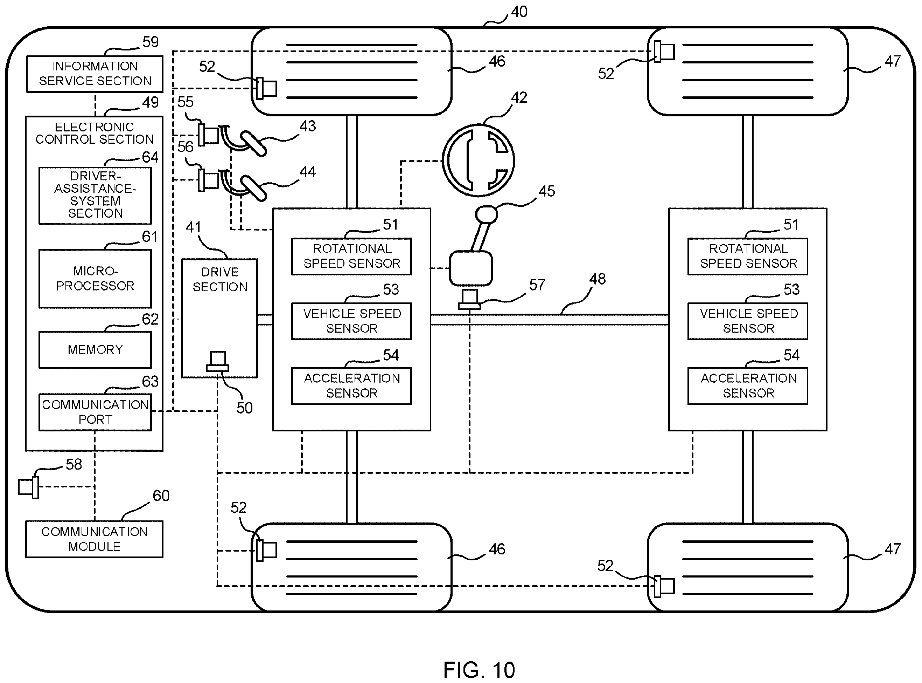

FIG. 10 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a transmitting section that performs reporting of a supported functionality;
a receiving section that receives an indication of at least one of activation, deactivation, fallback, and switch of a functionality; and
a control section that performs, based on the indication, at least one of the activation, the deactivation, the fallback, and the switch.

2. The terminal according to claim 1, wherein
the reporting includes at least one of information related to a nominal output, information necessary for at least one of measurement, calculation, and estimation of a nominal output, information related to a requirement of at least one of quality, amount, and drift of at least one of a nominal output and a nominal input, information related to a condition for an applicable functionality, information related to processing apparatus, information related to processing time, and information related to use of the supported functionality.

3. The terminal according to claim 1, wherein
the receiving section receives a request for the reporting, and
the transmitting section performs the reporting, based on the request.

4. The terminal according to claim 1, wherein
the transmitting section performs the reporting, based on at least one of occurrence of a specific event and a specific condition.

5. A radio communication method for a terminal, the radio communication method comprising:
performing reporting of a supported functionality;
receiving an indication of at least one of activation, deactivation, fallback, and switch of a functionality; and
performing, based on the indication, at least one of the activation, the deactivation, the fallback, and the switch.

6. A base station comprising:
a receiving section that receives a report of a supported functionality;
a transmitting section that transmits an indication of at least one of activation, deactivation, fallback, and switch of a functionality; and
a control section that indicates, by using the indication, at least one of the activation, the deactivation, the fallback, and the switch.
